# EUROPEAN PATENT APPLICATION

(11) **EP 1 721 790 A2**
(43) Date of publication of application: **15.11.2006**
(21) Application number: 06113667.7
(22) Date of filing: 09.05.2006
(51) Int. Cl.: B60R 21/26

(54) **A pyrotechnic gas generator**

(30) Priority: 11.05.2005 FR 0504724
(71) Applicant: AUTOLIV DEVELOPMENT AB, 447 83 Vargarda (SE)
(72) Inventor: Abaziou, Xavier, 29800, Landerneau (FR); Peremarty, François, 29000, Quimper (FR)
(74) Representative: Branger, Jean-Yves

(57) **Abstract**

The present invention relates to a pyrotechnic gas generator for inflating a motor vehicle airbag, the generator comprising: two coaxial cylindrical tubes, namely an inner tube (3) defining a combustion chamber (C), and an outer tube (2); and a pyrotechnic initiator (6) placed in line with the inner tube (3), suitable for initiating combustion of a pyrotechnic charge (5) placed inside said combustion chamber (C); the inner tube (3) presenting outlet orifices or "nozzles" (33) for evacuating the gas and particles generated by combustion of the charge towards a "condensation and filtering" chamber (T) defined by the space between the two tubes (2; 3), and while the outer tube (2) also presenting in its cylindrical wall (20) orifices (23) for releasing gas to the outside in order to inflate the airbag. The invention is characterized essentially by the facts that both tubes (2; 3) are blind, with their closed ends (22, 32) being disposed at the same end; said nozzles and/or their respective sections are distributed along the cylindrical wall (30) of the inner tube (3) in a non-linear distribution; and the gas outlet orifices (23) presented by the outer tube (2) are distributed over the outer tube in its zone facing the combustion chamber (C) in at least two distinct regions, e.g. at each of the two ends of the combustion chamber.

## Description

The present invention relates to a pyrotechnic gas generator for inflating a motor vehicle airbag.

The function of such devices is to protect the occupant of a vehicle in the event of a collision by generating gas to inflate a bag made of fabric or metal in order to damp the impact.

In the context of providing protection against lateral impacts, integrating such protection systems within seats for the purpose of protecting the chest and/or the pelvis and/or the head becomes a preponderant function.

In order to satisfy the design requirements of present vehicles and future trends, such protection systems need to move away from a shape that is generally a compact rectangular parallelepiped, towards a shape that is much more elongate and of section that is small relative to length.

This can also apply very well to so-called "frontal" protection, within the vehicle cabin for protecting the knees or the pelvis, or outside the cabin for protecting pedestrians (bumper- or hood-level equipment).

Thus, US patents Nos. 6 595 546 and 6 595 547 describe an airbag inflation system presenting a structure as mentioned above, i.e. of shape that is elongate, and of section that is small relative to its length.

That system comprises a pyrotechnic gas generator for inflating a motor vehicle airbag, the generator comprising:
· two coaxial cylindrical tubes, namely an inner tube defining a combustion chamber, and an outer tube; and
· a pyrotechnic initiator placed in line with the inner tube, suitable for initiating combustion of a pyrotechnic charge placed inside said combustion chamber;
· the inner tube presenting outlet orifices or "nozzles" for evacuating the gas and particles generated by combustion of the charge towards a "condensation and filtering" chamber defined by the space between the two tubes, and the outer tube also presenting in its cylindrical wall orifices for releasing gas to the outside in order to inflate the airbag.

Such a system generally gives satisfaction.

However, its structure is relatively complex.

In addition, because of the great length of the generator, it can happen that the combustion of the pyrotechnic charge is not transmitted from the initiator all the way to the opposite end of the combustion chamber. Combustion is then observed to go out. Under such circumstances, the bag does not inflate properly, which is harmful to the safety of the occupants of the vehicle.

The present invention seeks to provide a solution to those problems.

The generator proposed by the present invention is of the type specified above and is essentially remarkable by the facts that:
· both tubes are blind, with their closed ends being disposed at the same end;
· said nozzles and/or their respective sections are distributed along the cylindrical wall of the inner tube in a non-linear distribution; and
· the gas outlet orifices presented by the outer tube are distributed over the outer tube in its zone facing the combustion chamber in at least two distinct regions, e.g. at each of the two ends of the combustion chamber.

Because of this combination of characteristics, the structure of the generator is simplified and it is ensured that the combustion of the pyrotechnic charge will be entirely continuous from one end of the combustion chamber to the other.

In addition, according to other characteristics of the generator that are advantageous but not limiting:
· a segment of the wall of the inner tube beginning at the initiator end and extending over at least twice the diameter of said inner tube has no nozzles;
· said pyrotechnic charge is contained in a casing that is moisture-proof;
· said pyrotechnic charge is suitable for opening capsules in said casing;
· said charge is constituted by at least one series of touching pellets or at least one block of pyrotechnic material;
· each of said pellets presents an internal channel, giving it an annular shape;
· when there are at least two series of at least two blocks each, the generator includes between the two series, or between the two blocks, wedging and spacer means suitable for allowing combustion to progress from one series to the other, or from one block to the other;
· at least one nozzle is formed in the inner tube in register with the wedging and spacer means;
· said condensation and filtering chamber contains filter means for filtering the hot gas and particles coming from the combustion chamber;
· the zone of the condensation and filtering chamber situated immediately facing said nozzles does not have filter means;
· the outer tube does not have any orifices facing the nozzles;
· said outer tube is crimped onto a support carrying said initiator;
· said support is formed by two identical half-shells clamped onto the base of said initiator; and
· the ratio of the diameter of the outer tube divided by the length of the outer tube lies in the range 5 to 20.

Other characteristics and advantages of the invention appear on reading the following detailed description of certain embodiments. The description, which is given by way of non-limiting example, refers to the accompanying figures, in which:
· Figure 1 is a longitudinal section view on a vertical midplane through a generator in accordance with the present invention, the gas outlet orifices presented by the inner tube of the generator not being shown; and
· Figures 2 to 4 are simplified views, likewise in section, of three additional embodiments of the Figure 1 generator.

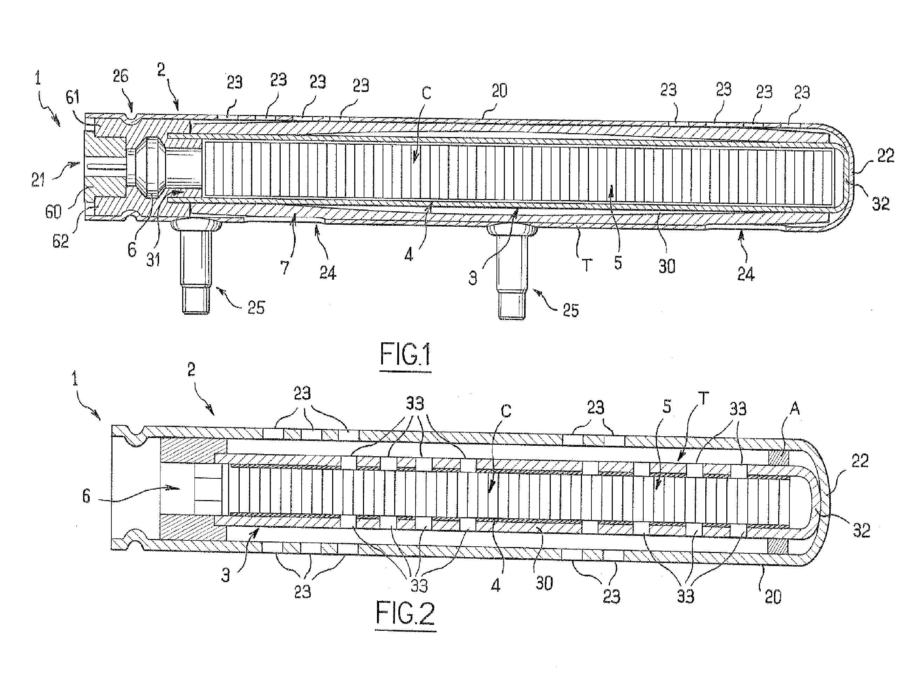

As mentioned above, the generator 1 of the invention, as shown in accompanying Figure 1, comprises two coaxial cylindrical tubes, i.e. an inner tube 3 whose inside volume defines a combustion chamber C, and an outer tube 2.

By way of example, these two tubes are made of thin metal.

In the embodiment shown, the tubes are of circular section and present the feature of both being blind, with their closed ends both being at the same end. However, it is possible to use other shapes of tube section, for example a section of square shape.

In Figure 1, references 20 and 30 designate the cylindrical walls, while references 22 and 32 designate their blind ends, respectively.

Their respective openings, remote from their blind ends, are referenced 21 and 31.

Purely by way of indication, the outer tube 2 presents a length lying in the range 150 millimeters (mm) to 280 mm, while the inner tube presents a length lying in the range 130 mm to 260 mm.

Still by way of indication, the values of their respective inside diameters lie in the range 10 mm to 20 mm.

The fact of using blind tubes presents the advantage over prior art generators of not requiring the corresponding end of the tube to be closed off by any means whatsoever, where that requirement suffers from the drawback of requiring additional assembly operations, of lengthening assembly time, and of requiring a stock of additional parts to be managed. Such blind tubes present increased strength against pressure and lead to a reduction in costs.

As is particularly visible in Figure 1, the blind end 32 of the inner tube 3 is in contact with the blind end 22 of the outer tube.

Because of the difference in length between the tubes, there exists a zone inside the tube 2 which is directly in communication with its opening 2, in which zone the inner tube 3 is not present.

It is in this zone that a pyrotechnic initiator 6 is fitted, placed immediately in line with the inner tube 3, and suitable for initiating the combustion of a pyrotechnic charge 5 placed inside said combustion chamber C.

The initiator is itself positioned via its electrodes on a socket 60, with the assembly as formed in this way being clamped in a support that is made up of two identical half-shells 61 and 62.

The outer tube 2 is crimped onto this support 61/62 via an annular zone 26.

The initiator is partially engaged inside the tube 3, at a determined distance from the pyrotechnic charge placed inside it. This distance is selected by the person skilled in the art as a function of the best compromise between sufficient ignition of the pyrotechnic charge and not damaging said charge.

The charge 5 in this example is constituted by touching pellets, preferably of propellant, and presenting an internal channel giving them an annular shape.

As a result, there is an empty passage without any material extending in the longitudinal direction of the chamber C on the axis of the charge C. This passage allows ignition gas to flow.

The outside diameter of the pellets is equal to the inside diameter of the tube 3, ignoring clearance.

In the example designed herein, the pellets are initially inserted in a casing 4 providing protection against moisture, the casing being made for example as a multilayer laminate of polymer and metal. This ensures that the charge remains perfectly dry, regardless of the conditions under which the charge is stored or the generator is used.

In embodiments that are not shown herein, the pyrotechnic charge could be of some other form. Thus, the charge could be made up of pellets in bulk, or of plates, or indeed as an extruded one-piece block.

Although not visible in Figure 1, the inner tube 3 presents outlet orifices or "nozzles" (referred to below with reference to the following figures) for evacuating the gas and particles generated by the combustion of the charge towards a condensation and filtering chamber T.

This chamber is defined by the annular space between the two tubes 2 and 3.

The outer tube 21 also presents in its cylindrical wall 20 outlet orifices 23 for allowing the gas to pass to an airbag (not shown herein in order to clarify the figure).

Studs for fastening to a support are referenced 25. "Balancing" openings 24 for diffusing gas serve to ensure that the generator is not propulsive.

In the plenum chamber T, means are provided for filtering hot gas and particles coming from the combustion chamber C.

This may be a filter of metal fibers, a wire winding, or indeed compacted metal wires.

The zone of the chamber T that is situated immediately facing the nozzles is preferably lacking in filter means. This enables gas to penetrate cleanly and directly into the chamber T, and then to progress more slowly and more diffusely through the filter means.

That is the general structure of a generator in accordance with the present invention.

Reference is now made to Figures 2 to 4 for explaining the structure and the operation of three possible embodiments.

In these figures, the general structure is the same as that shown in Figure 1. However for reasons of clarity, the figures are simplified.

Nevertheless, the orifices or "nozzles" of the inner tube 3 can be seen therein. However the filter means of the chamber T are not shown. They are replaced by a spacer A to show that there exists an annular space between the two tubes 2 and 3.

Preferably, and in all of the embodiments described, the pyrotechnic charge 5 contained in the casing 4 is capable of opening the casing when the pressure within that results from the combustion of the charge becomes large.

The problem with long generators such as the generators of the present invention is the result of the fact that it is particularly difficult to be sure that the entire pyrotechnic charge will ignite and enter into combustion.

It is not unusual to observe that combustion goes out before it is complete, which has a negative effect on the inflation of the airbag to which the generator is connected.

Conversely, problems have also been observed of pressure rising excessively within the combustion, and that can lead to the generator bursting.

The present invention provides a solution to these problems.

This solution lies in particular in the particular way in which the orifices or "nozzles" 33 are located in the inner tube 3 that defines the combustion chamber.

Thus, in accordance with the invention, these nozzles 33 are distributed along the cylindrical wall 30 of the inner tube in a non-linear distribution.

The term "non-linear distribution" is used to mean that the distribution of the nozzles and/or the distribution of their respective sections along the longitudinal axis of the tube is/are not regular, i.e. there are at least two values for gaps between adjacent nozzles, or at least two values for nozzle sections along the tube.

Thus, the above-mentioned nozzles can present different sections.

Still in accordance with the above definition, the nozzles are not necessarily all distributed along a common generator line of the tube 3. On the contrary, they may have a varying angular distribution. Nevertheless, it is the way the nozzles are distributed "along the longitudinal axis of the tube" that is not regular.

Thus, this definition includes, for example, the nozzles being distributed in at least two groups, the gap between the nozzles in each of the groups being identical, whereas the gap between the first group and the second group is different, e.g. being greater.

This is the situation shown with reference to the embodiment of Figure 2.

In this variant, and in accordance with an advantageous characteristic of the invention, a segment of the wall of the inner tube 3 beginning at the end where the initiator 6 is located and extending over a length of at least twice the diameter of the inner tube 3, there are no nozzles.

This particular positioning of the nozzles makes it possible to prevent combustion of the pyrotechnic charge 5 from going out, and also makes it possible to avoid the pressure within the combustion chamber rising excessively, since that could lead to a runaway phenomenon that can degenerate in bursting.

The zone of the tube 3 that does not have any nozzles and that is situated immediately in line with the initiator 6 nevertheless enables the pressure of the gas within the combustion chamber to be caused to increase to a value that is reasonable for sustaining combustion.

The presence of a first series of nozzles 33 along the tube, going towards its blind end, thus allows some of the gas to escape, thereby contributing to reducing the pressure inside the combustion chamber, while maintaining progress of combustion under stable conditions.

This phenomenon is repeated in alternation along the tube as combustion progresses.

The channel presented by the pellets of the pyrotechnic charge contribute favorably to propagating combustion.

Still with reference to Figure 1, the gas that enters into the chamber T is filtered and escapes to the outside (in order to inflate the bag of an airbag system) via orifices 23 provided through the cylindrical outer wall of the outer tube 2.

In accordance with a characteristic of the invention, these gas outlet orifices 23 presented by the outer tube 2 are distributed therein in its zone facing the combustion chamber C, and at the ends of said zone.

This makes it possible to use a bag having separate chambers.

Preferably, but not necessarily, the orifices 23 are not situated immediately in register with the nozzles 33, but on the contrary are longitudinally offset relative thereto.

Thus, as the gas progresses to the outside, the path followed is lengthened by "baffles", thereby contributing to better filtering and better cooling of the gas.

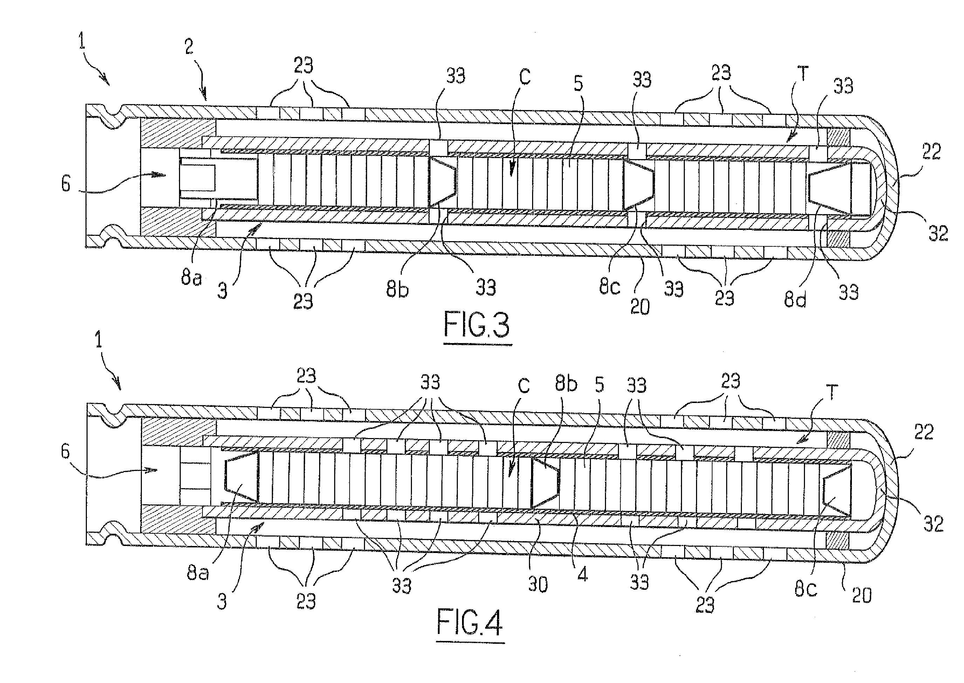

In the embodiment of Figure 3, the pyrotechnic charge is constituted by three distinct series of touching pellets, these series being separated in pairs by spacer and wedging means 8a to 8d that are suitable for allowing combustion to progress from one series to another.

By way of example, these may be perforated parts made of plastics material or of metal that, where appropriate, present a certain amount of elasticity in the longitudinal direction in order to compensate for any slack.

The function of these parts is to ensure that the pressure does not advance too quickly inside the combustion chamber C and does not lead to a self-tightening phenomenon in the channel.

It should be observed that in this embodiment, the nozzles 33 are placed facing the spacer and wedging means 8b, 8c, and 8d.

These means and the associated nozzles act somewhat like pressure valves. In other words, they enable the pressure inside the combustion chamber C to be reduced and they prevent the nozzles becoming obstructed by combustion residues while releasing some of the gas into the chamber T and while also transmitting combustion to the following series.

The embodiment of Figure 4 presents the feature of having only three spacer and wedging parts 8a, 8b, and 8c, and of having nozzles 33 only in the zones that are situated between two of these spacer and wedging parts.

Finally, there follows a summary of the main advantages provided by the generator of the invention.

Firstly, the generator enables the protection system to be integrated better in environments that require compactness, because the generator is small in section.

It also enables better integration with bags having integrated filtering and diffusion.

The gas generated by the combustion of the pyrotechnic charge diffusing via the ends of the generator make it possible to use bags having separate chambers.

It should also be observed, in particularly advantageous manner, that it operates fast, because combustion propagates quickly along the entire length of the generator.

Its weight is relatively small compared with conventional systems.

Finally, because of the simplicity of its structure, it enables the overall cost of the protection system in which it is integrated to be considerably reduced.

## Claims

1. A pyrotechnic gas generator for inflating a motor vehicle airbag, the generator comprising:
· two coaxial cylindrical tubes, namely an inner tube (3) defining a combustion chamber (C), and an outer tube (2); and
· a pyrotechnic initiator (6) placed in line with the inner tube (3), suitable for initiating combustion of a pyrotechnic charge (5) placed inside said combustion chamber (C);
the inner tube (3) presenting outlet orifices or "nozzles" (33) for evacuating the gas and particles generated by combustion of the charge towards a "condensation and filtering" chamber (T) defined by the space between the two tubes (2; 3), and the outer tube (2) also presenting in its cylindrical wall (20) orifices (23) for releasing gas to the outside in order to inflate the airbag,
the generator being **characterized by** the facts that:
· both tubes (2; 3) are blind, with their closed ends (22, 32) being disposed at the same end;
· said nozzles and/or their respective sections are distributed along the cylindrical wall (30) of the inner tube (3) in a non-linear distribution; and
· the gas outlet orifices (23) presented by the outer tube (2) are distributed over the outer tube in its zone facing the combustion chamber (C) in at least two distinct regions, e.g. at each of the two ends of the combustion chamber.

2. A generator according to claim 1, **characterized by** the fact that a segment of the wall of the inner tube (3) beginning at the initiator end (6) and extending over at least twice the diameter of said inner tube (3) has no nozzles (33).

3. A generator according to claim 1 or claim 2, **characterized by** the fact that said pyrotechnic charge (5) is contained in a casing (4) that is moisture-proof.

4. A generator according to claim 3, **characterized by** the fact that said pyrotechnic charge (5) is suitable for opening capsules in said casing (4).

5. A generator according to any preceding claim, **characterized by** the fact that said charge (5) is constituted by at least one series of touching pellets or at least one block of pyrotechnic material.

6. A generator according to claim 5, **characterized by** the fact that each of said pellets presents an internal channel, giving it an annular shape.

7. A generator according to claim 5 or claim 6, the generator having at least two series or at least two blocks, and being **characterized by** the fact that between the two series, or between the two blocks, it includes wedging and spacer means (8a, 8b, 8c, 8d) suitable for allowing combustion to progress from one series to the other, or from one block to the other.

8. A generator according to claim 7, **characterized by** the fact that at least one nozzle (33) is formed in the inner tube (3) in register with the wedging and spacer means (8a, 8b, 8c, 8d).

9. A generator according to any preceding claim, **characterized by** the fact that said condensation and filtering chamber (T) contains filter means (7) for filtering the hot gas and particles coming from the combustion chamber (C).

10. A generator according to claim 9, **characterized by** the fact that the zone of the condensation and filtering chamber (T) situated immediately facing said nozzles (33) does not have filter means (7).

11. A generator according to any preceding claim, **characterized by** the fact that the outer tube (2) does not have any orifices (23) facing the nozzles (33).

12. A generator according to any preceding claim, **characterized by** the fact that said outer tube (2) is crimped onto a support (61, 62) carrying said initiator (6) .

13. A generator according to claim 12, **characterized by** the fact that said support (61, 62) is formed by two identical half-shells clamped onto the base of said initiator.

14. A generator according to any preceding claim, **characterized by** the fact that the ratio of the diameter of the outer tube (2) divided by the length of the outer tube (2) lies in the range 5 to 20.
